# EUROPEAN PATENT APPLICATION

(11) **EP 4 806 786 A1**
(43) Date of publication of application: **16.09.2026**
(21) Application number: 26157597.1
(22) Date of filing: 10.02.2026
(51) Int. Cl.: B64D 11/02

(54) **CONVERTIBLE LAVATORY SYSTEMS FOR AN INTERNAL CABIN OF A VEHICLE**

(30) Priority: 13.03.2025 US 202563771045 P; 05.01.2026 US 202619439588
(71) Applicant: The Boeing Company, Arlington, VA 22202 (US)
(72) Inventor: ADDIS, Paul, Arlington, 22202 (US); TABORA, Justin, Arlington, 22202 (US); ADAMS, Martin Clive, Arlington, 22202 (US)
(74) Representative: Plasseraud IP

(57) **Abstract**

A lavatory system for an internal cabin of a vehicle comprises a monument defining an internal chamber. The monument comprises a contoured wall configured to conform to at least a portion of a shape of one or more passenger seats. First and second toilets are within the internal chamber. The first and second toilets can be staggered in relation to one another. A stowage chamber is within the internal chamber. The stowage chamber is configured to retain emergency equipment. A pedestal has one or more portions that are shaped to provide additional space within the internal chamber.

## Description

### CROSS-REFERENCE

This application relates to and claims priority benefits from U.S. Provisional Patent Application No. 63/771,045, filed March 13, 2025.

### FIELD

Examples of the present disclosure generally relate to convertible lavatory systems and methods for an internal cabin of a vehicle, such as a commercial aircraft.

### BACKGROUND

Commercial aircraft are used to transport passengers between various locations. A typical commercial aircraft includes one or more lavatories within an internal cabin.

Space within an internal cabin of an aircraft is limited. Monuments, such as those of lavatories, necessarily occupy space within the internal cabin. However, airlines strive to find new ways to increase passenger seating within an internal cabin, as passenger seats provide increased revenue.

Currently, airlines are required to dispose emergency equipment within a "dog house," which is typically installed directly forward of a lavatory. As can be appreciated, the dog house also occupies space within the internal cabin.

Additionally, a known centerline lavatory has a high head space. The centerline lavatory occupies substantial space within the lavatory.

### SUMMARY

A need exists for an improved lavatory for an internal cabin of a vehicle, such as a commercial aircraft.

With that need in mind, certain examples of the present disclosure provide a lavatory system configured to be disposed within an internal cabin of a vehicle. The lavatory system includes a monument defining an internal chamber. The monument includes a contoured wall configured to conform to at least a portion of a shape of one or more passenger seats. First and second toilets are within the internal chamber.

In at least one example, a front wall of the monument has a lower portion that is forward from an upper portion. A shape of the front wall conforms to a profile of the one or more passenger seats.

The first toilet and the second toilet can be staggered in relation to one another.

In at least one example, a stowage chamber within the internal chamber. As a further example, the stowage chamber retains emergency equipment. The stowage chamber may be configured to retain emergency equipment. The stowage chamber is within the internal chamber and can be secured to one or both of a rear wall or a side wall of the monument. As a further example, the stowage chamber is contained behind a curved shroud that connects to one or more of a ceiling, the rear wall, or the side wall. As a further example, a lighting fixture is secured to an upper portion of the curved shroud.

In at least on example, the lavatory system further includes a pedestal that has one or more portions that are shaped to provide additional space within the internal chamber. For example, the pedestal extends vertically from a base floor, and is recessed toward a front wall of the monument.

In at least one example, the monument has fittings configured to be secured to seat tracks within the internal cabin.

In at least one example, the monument is configured to be disposed at a location that is coaxial within a centerline of the internal cabin.

In at least one example, the monument further includes a moveable wall disposed between the first toilet and the second toilet. The moveable wall is moveable between (a) an extended position, in which the lavatory system provides a first lavatory compartment including the first toilet, and a second lavatory compartment including the second toilet, and (b) a stowed position, in which the lavatory system provides an expanded lavatory compartment that encompasses the spaces of both the first lavatory compartment and the second lavatory compartment. The expanded lavatory compartment provides a contiguous space in which the first lavatory compartment is open to the second lavatory compartment.

The lavatory system can also include a first diaper-changing station secured to one or more walls above the first toilet, and a second diaper-changing station secured to the one or more walls above the second toilet.

Certain examples of the present disclosure provide a vehicle including an internal cabin, and a lavatory system within the internal cabin, as described herein.

### BRIEF DESCRIPTION OF THE DRAWINGS

Figure 1 illustrates a perspective front view of an aircraft, according to an example of the present disclosure.
Figure 2A illustrates a top plan view of a lavatory system within an internal cabin of a vehicle, according to an example of the present disclosure.
Figure 2B illustrates a top plan view of a lavatory system within an internal cabin of a vehicle, according to an example of the present disclosure.
Figure 3A illustrates a lateral view of a lavatory system within an internal cabin of a vehicle, according to an example of the present disclosure.
Figure 3B illustrates a lateral view of a lavatory system within an internal cabin of a vehicle, according to an example of the present disclosure.
Figure 4 illustrates a top internal view of a lavatory system, according to an example of the present disclosure.
Figure 5 illustrates a top internal view of a lavatory system, according to an example of the present disclosure.
Figure 6 illustrates an isometric front view of a lavatory system, according to an example of the present disclosure.
Figure 7 illustrates an isometric rear view of a lavatory system, according to an example of the present disclosure.
Figure 8 illustrates an isometric interior view of a lavatory system, according to an example of the present disclosure.

### DETAILED DESCRIPTION

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

Certain examples of the present disclosure provide a vehicle including an internal cabin, and a lavatory system within the internal cabin. The lavatory system includes a monument defining an internal chamber. The monument includes a contoured wall configured to conform to at least a portion of a shape of one or more passenger seats. The contoured wall may have a shape, position, and/or size dimensions configured to conform to at least a portion of a shape of one or more passenger seats. In at least one example, a lower portion of the monument can include seat fittings, which are used to secure the monument to seat tracks. First and second toilets are within the internal chamber. The first toilet and the second toilet can be staggered in relation to one another. Optionally, the first and second toilets may not be staggered. A stowage chamber is within the internal chamber. The stowage chamber is configured to retain emergency equipment, miscellaneous equipment, personal items (such as of flight attendants), and/or the like. A pedestal (such as including a sink) has one or more portions that are shaped to provide additional space within the internal chamber. In at least one example, a lighting fixture is secured to an outboard wall. In at least one example, a diaper-changing station (such as having a board or panel that is moveable between a horizontal position and a vertical position) can be integrated into the monument.

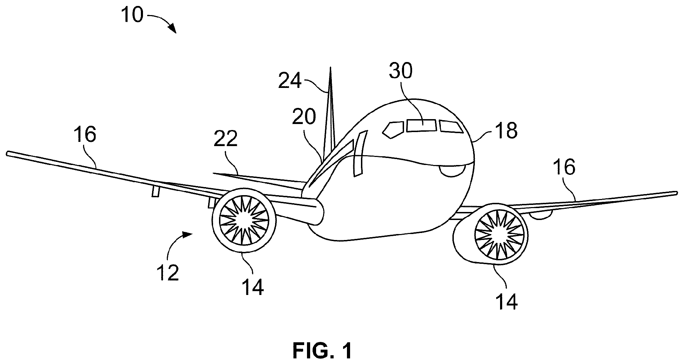

Figure 1 illustrates a perspective front view of an aircraft 10, according to an example of the present disclosure. The aircraft 10 includes a propulsion system 12 that includes engines 14, for example. Optionally, the propulsion system 12 may include more engines 14 than shown. The engines 14 are carried by wings 16 of the aircraft 10. In other examples, the engines 14 may be carried by a fuselage 18 and/or an empennage 20. The empennage 20 may also support horizontal stabilizers 22 and a vertical stabilizer 24.

The fuselage 18 of the aircraft 10 defines an internal cabin 30, which includes a flight deck or cockpit, one or more work sections (for example, galleys, personnel carry-on baggage areas, and the like), one or more passenger sections (for example, first class, business class, and coach sections), one or more lavatories, and/or the like. Optionally, instead of an aircraft, examples of the present disclosure may be used with various other vehicles, such as automobiles, buses, locomotives and train cars, watercraft, and the like. Further, examples of the present disclosure may be used with respect to fixed structures, such as commercial and residential buildings.

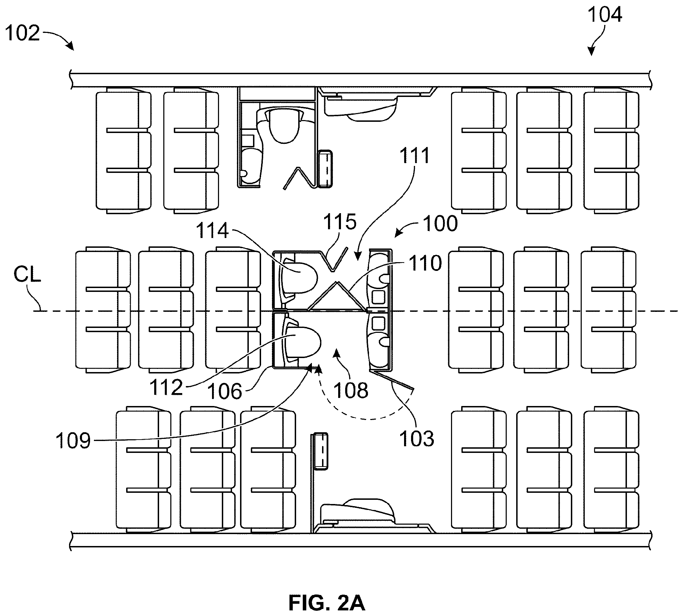

Figure 2A illustrates a top plan view of a lavatory system 100 within an internal cabin 102 of a vehicle 104 (such as a commercial aircraft), according to an example of the present disclosure. In at least one example, the lavatory system 100 is a center or centerline lavatory system. That is, the lavatory system 100 can be disposed at a location that is coaxial with a centerline CL of the internal cabin 102. Optionally, the lavatory system 100 can be disposed at various other locations within the internal cabin 102.

The lavatory system 100 is or otherwise includes a monument 106, which includes walls, a ceiling, a floor, and/or the like. An interior chamber 108 is defined within the monument 106. In at least one example, the monument 106 is secured to seat tracks that are configured to secure seats within the internal cabin. In particular, the seat tracks extend along a length of the floor of the internal cabin 102. The monument 106 includes fittings extending from a lower surface which are received and retained by portions of the seat tracks. The fittings can be the same type of fittings that extend from seats within the internal cabin 102. Optionally, the monument 106 may not be secured to seat tracks. For example, the monument 106 can be secured to the floor or other portions with fasteners, adhesives, and/or the like.

In at least one example, the lavatory system 100 is convertible in that the monument 106 includes a movable wall 110 that can be moved between an extended position, in which the lavatory system 100 provides a first lavatory compartment 109 (including a first toilet 112) and a second lavatory compartment 111 (including a second toilet 114), and a stowed (such as folded) position, in which the lavatory system 100 provides an expanded lavatory compartment that encompasses the spaces of both the first lavatory compartment 109 and the second lavatory compartment 111. The expanded lavatory compartment provides a contiguous space in which the first lavatory compartment 109 is open to the second lavatory compartment 111. The monument 106 includes a first outboard wall 113 that is configured to be opened and closed to selectively allow access into the first lavatory compartment 109, and a second outboard wall 115 configured to be opened and closed to selectively allow access into the second lavatory compartment 111.

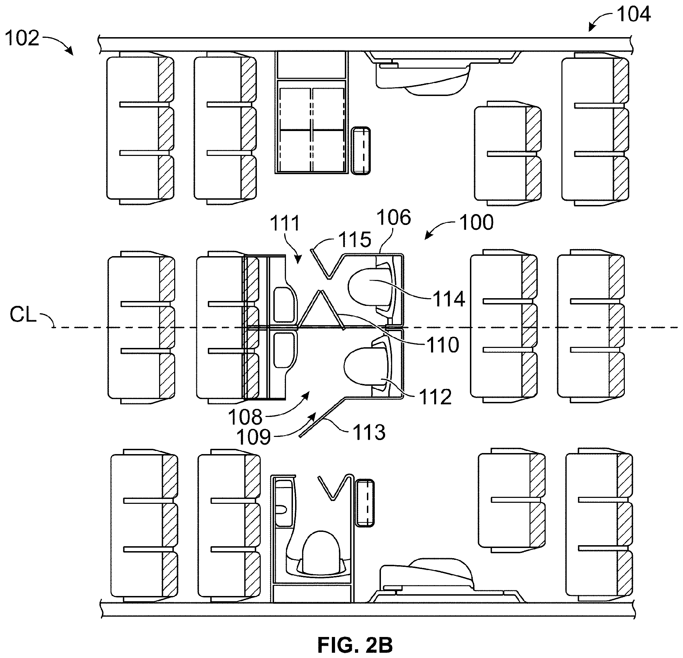

Figure 2B illustrates a top plan view of a lavatory system 100 within an internal cabin 102 of a vehicle 104, according to an example of the present disclosure. The lavatory system 100 is similar to that lavatory system 100 of Figure 2A, except that components within the lavatory system 100 can be oriented differently, as shown.

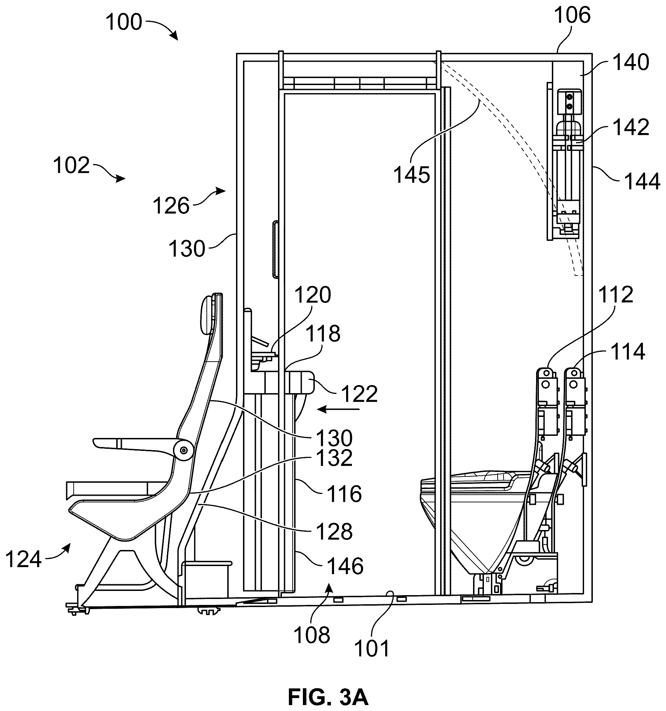

Figure 3A illustrates a lateral view of a lavatory system 100 within an internal cabin 102 of a vehicle, according to an example of the present disclosure. The lavatory system 100 includes a base floor 101 that supports a first toilet 112 and a second toilet 114, one or more cabinets 116, and a sink 118 or wash basin. A faucet 120 is configured to flow water into the sink 118. The faucet 120 is in fluid communication with a water supply, such as through one or more conduits, pipes, tubes, and/or the like. The sink 118 is disposed on and/or within a countertop 122, which is disposed on or otherwise over a cabinet 116. The lavatory system 100 may be arranged differently than shown. The lavatory system 100 may include more or less components than shown. Alternatively, the lavatory system 100 can include a single toilet (such as the toilet 112 or the toilet 114).

In at least one example, the lavatory system 100 is a centerline lavatory system that is disposed behind (that is, after) a row of seats. In order to accommodate extra space within the internal cabin (which can be used for increased leg room for seats, or even an extra row of seats 124), a front wall 126 of the monument 106 has a lower portion 128 that is forward from an upper portion 130. The lower portion 128 may be located further forward than the upper portion 130. The lower portion 128 may extend further forward than the upper portion 130. The shape of the front wall 126 conforms to or otherwise follows a profile of the seats 124, such that the lower portion angles away from a seat base 132 and backrest 134. The upper portion 130 is set away from the backrest 134, which can thereby allow the extra row of seats 124 to be disposed directly in front of (such as within 6 inches, that is 15,24 centimeters, or less) the monument 106. Conversely, if the front wall 126 did not have a recessed upper portion, the flat, straight wall would preclude the row of seats 124 directly in front of the monument 106, and/or the row of seats would be set further forward. The wall (such as the front wall 126) is a contoured wall configured to conform to at least a portion of a shape of one or more passenger seats 124.

In at least one example, the lavatory system 100 also includes a stowage chamber 140 for emergency equipment 142 (such as a fire extinguisher, a first aid kit, and the like), miscellaneous equipment, personal items (such as of flight attendants), and/or the like. In contrast to a separate dog house for the emergency equipment, the stowage chamber 140 is disposed within the internal chamber 108 of the lavatory system 100. For example, the stowage chamber 140 is secured to a rear wall 144 and/or side wall of the monument 106. By disposing the stowage chamber 140 for the emergency equipment 142 within the lavatory system 100, additional space within the internal cabin 102 is freed for other uses, such as additional spacing between rows of seats. The stowage chamber 140 is separate and distinct from any cabinet underneath a sink within the lavatory. The stowage chamber 140 provides stowage areas other than the cabinet(s) within the lavatory.

The stowage chamber 140 can be contained within a curved shroud 145, such as connects to a ceiling, the rear wall 144, and/or a side wall. The curved shroud 145 conceals the emergency equipment 142. The curved shroud 145 hides the emergency equipment 142, while giving the appearance that the stowage chamber 140 is outside of the internal chamber 108, which can improve aesthetics.

In at least one example, the cabinet 116 and/or sink 118 are secured over the floor by a vertical pedestal 146. The vertical pedestal 146 extends vertically from the base floor 101, and is recessed toward the front wall 126 (that is, the pedestal 146 is recessed behind a front of the countertop 122, and does not extend forward of the countertop 122). In this manner, the pedestal 146 provides increased space within the internal chamber 108. The increased space provides persons of reduced mobility, who may require wheelchairs, additional space for maneuvering into, within, and out of the lavatory system 100. As described and shown herein, the pedestal 146 has one or more portions that are shaped to provide additional space within the internal chamber 108. The additional space can be used to allow for easier movement into, within, and out of the internal chamber 108.

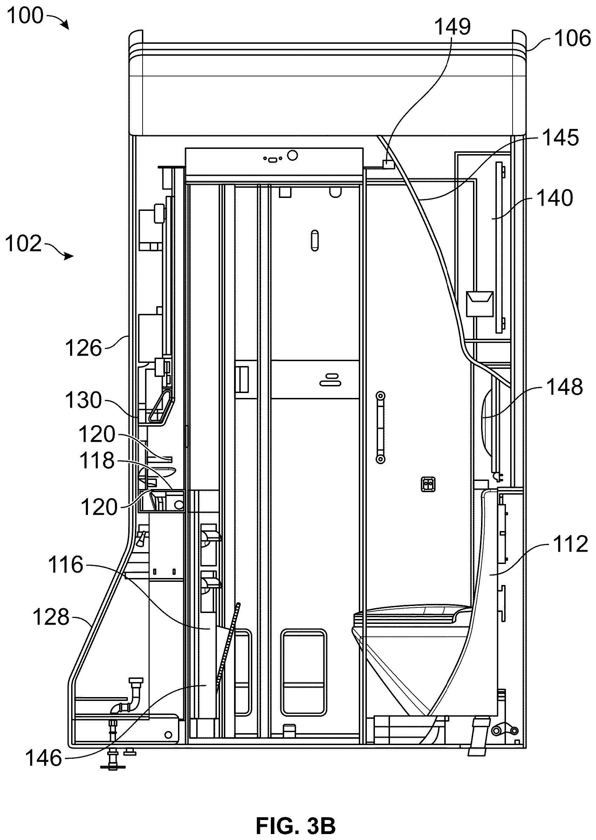

Figure 3B illustrates a lateral view of a lavatory system 100 within an internal cabin 102 of a vehicle, according to an example of the present disclosure. As shown, the lavatory system 100 can include a diaper-changing station 148, configured to allow individuals to change diapers of babies. The diaper-changing station 148 is secured to a wall below the stowage chamber 140. For example, the diaper-changing station 148 is secured to a wall above the toilet 112 (or 114) and below the curved shroud 145.

Additionally, a lighting fixture 149 can be secured to an upper portion of the curved shroud 145. The lighting fixture 149 includes one or more light-emitting elements (such as light-emitting diodes) and can be disposed directly above the toilet 112 (and/or the toilet 114).

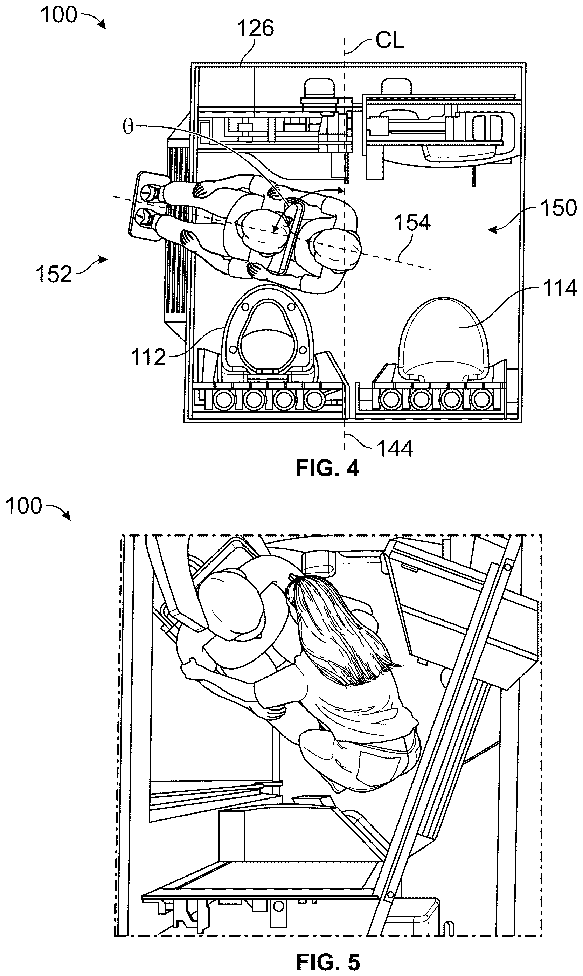

Figure 4 illustrates a top internal view of the lavatory system 100. Referring to Figures 3A and 4, in at least one example, the first toilet 112 and the second toilet 114 are staggered in relation to one another. In particular, the first toilet 112 is disposed at a position that is to a side, and ahead of the second toilet 114. The second toilet 114 is closer to the rear wall 144 than the first toilet 112. Conversely, the first toilet 112 is closer to the front wall 126 than the second toilet 114. Optionally, the first toilet 112 can be closer to the rear wall 144 than the second toilet 114. Also, optionally, both the first toilet 112 and the second toilet 114 can be disposed closer to the front wall 126 than the rear wall 144, and the sink 118 and pedestal 146 can be coupled to the rear wall 144, instead of the front wall 126.

When the lavatory system 100 is in an expanded state (such that moveable wall 110 (shown in Figure 2) is in the stowed position), thereby providing the expanded lavatory compartment 150, the staggered configuration of the first toilet 112 and the second toilet 114 provides space within the internal chamber 108 that is easier for persons of reduced mobility 152, such as using wheelchairs 154, to maneuver. The moveable wall 110 may be configured to be moved between: (a) an extended position, in which the lavatory system 100 provides a first lavatory compartment 109 including the first toilet 112, and a second lavatory compartment 111 including the second toilet 114, and (b) a stowed position, in which the lavatory system 100 provides an expanded lavatory compartment 150 that encompasses the spaces of both the first lavatory compartment (109) and the second lavatory compartment 111, wherein the expanded lavatory compartment 150 provides a contiguous space in which the first lavatory compartment 109 is open to the second lavatory compartment 111.

The staggered configuration of the toilets 112 and 114 allow more leg room for an individual to swing a wheelchair and legs when entering and leaving the internal chamber 108, as well as provide additional space for the wheelchair while an individual transfers into the lavatory system 100, such as over a 30 degree sweep angle Θ in relation to a centerline CL. It has been found that the 30 degree sweep angle Θ provides improved room for maneuverability into and out of the lavatory system 100. Optionally, the toilets 112 and 114 may not be staggered (such as shown in Figure 3B).

Figure 5 illustrates a top internal view of a lavatory system 100, according to an example of the present disclosure. The lavatory system 100 shown in Figure 5 is similar to those described herein, except that the lavatory system 100 can have a trapezoidal floor plan. The lavatory system 100 can have various other shaped floor plans.

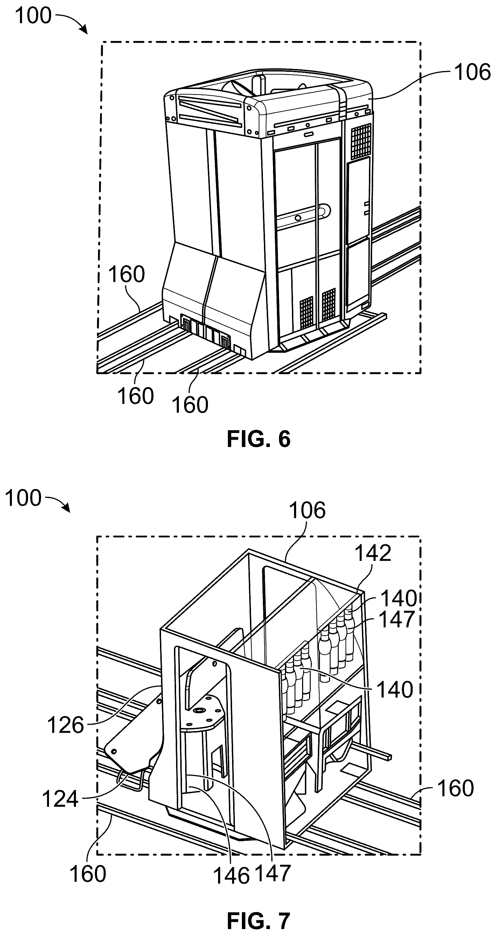

Figure 6 illustrates an isometric front view of a lavatory system 100, according to an example of the present disclosure. The monument 106 of the lavatory system 100 includes fittings that secure to seat tracks 160 within an internal cabin. The fittings can be the same type as are included with seats that secure the seats to the seat tracks. Any of the examples of the lavatory system 100 described herein can be secured to seat tracks.

Figure 7 illustrates an isometric rear view of a lavatory system 100, according to an example of the present disclosure. The lavatory system 100 has a rectangular floor plan. The lavatory system 100 shown in Figure 7 includes the contoured front wall 126, which allows for the row of seats 124 closer to the monument 106, the vertical pedestal 146, which can include angled or other such recessed panels 147 proximate to a thresholds/doors (thereby providing additional space for maneuvering), the staggered toilets 112 and 114, and the stowage chambers 140 for the emergency equipment 142. It has been found that features described herein provide the lavatory system 100 that is more compact (by up to 6 inches), and which allows for ease of use by persons of reduced mobility.

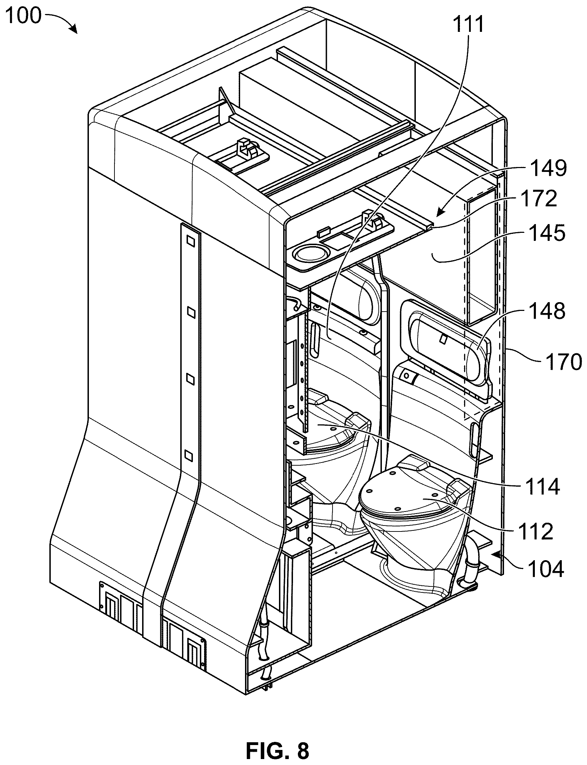

Figure 8 illustrates an isometric interior view of the lavatory system 100, according to an example of the present disclosure. One or both lavatory compartments 109 and/or 111 can include a diaper-changing station 148 secured to a wall 170 above the toilets 112 and/or 114, and below the curved shroud 145. Additionally, one or more lighting fixtures 149 can be secured to and/or forward from an upper portion 172 of the curved shroud 145. The lighting fixture(s) 149 can be configured to emit light onto the curved shroud 145 to provide aesthetically-pleasing lighting accents on portions of the curved shroud 145.

As described herein, examples of the present disclosure provide lavatory systems 100, such as can be disposed at centerlines of wide body aircraft. The lavatory systems 100 are compact, and allow for additional cabin space to be used for seating, for example, while also providing an acceptable space to perform wheelchair transfers. The stowage chamber 140 allows essential emergency equipment 142 to be stored above one or more toilets 112 and/or 114, thereby freeing up space forward and under a passenger seat, for example. In at least one example, the butt-line of the lavatory system 100 is constant to increase cabin configurability, and maintain a constant aisle space.

The following Clauses provide some example configurations of the laboratory system and the vehicle comprising the laboratory system.

Clause 1. A lavatory system configured to be disposed within an internal cabin of a vehicle, the lavatory system including:
a monument defining an internal chamber, wherein the monument comprises a contoured wall configured to conform to at least a portion of a shape of one or more passenger seats;
a first toilet within the internal chamber; and
a second toilet within the internal chamber.

Clause 2. The lavatory system of Clause 1, wherein a front wall of the monument has a lower portion that is forward from an upper portion, and wherein a shape of the front wall conforms to a profile of the one or more passenger seats.

Clause 3. The lavatory system of Clauses 1 or 2, wherein the first toilet and the second toilet are staggered in relation to one another.

Clause 4. The lavatory system of any of Clauses 1-3, further comprising a stowage chamber within the internal chamber.

Clause 5. The lavatory system of Clause 4, wherein the stowage chamber retains emergency equipment.

Clause 6. The lavatory system of Clauses 4 or 5, wherein the stowage chamber is within the internal chamber and secured to one or both of a rear wall or a side wall of the monument.

Clause 7. The lavatory system of Clause 6, wherein the stowage chamber is contained behind a curved shroud that connects to one or more of a ceiling, the rear wall, or the side wall.

Clause 8. The lavatory system of Clause 7, further comprising a lighting fixture secured to an upper portion of the curved shroud.

Clause 9. The lavatory system of any of Clauses 1-8, further comprising a pedestal that has one or more portions that are shaped to provide additional space within the internal chamber.

Clause 10. The lavatory system of Clause 9, wherein the pedestal extends vertically from a base floor, and is recessed toward a front wall of the monument.

Clause 11. The lavatory system of any of Clauses 1-10, wherein the monument has fittings configured to be secured to seat tracks within the internal cabin.

Clause 12. The lavatory system of any of Clauses 1-11, wherein the monument is configured to be disposed at a location that is coaxial within a centerline of the internal cabin.

Clause 13. The lavatory system of any of Clauses 1-12, wherein the monument further comprises a moveable wall disposed between the first toilet and the second toilet, wherein the moveable wall is moveable between (a) an extended position, in which the lavatory system provides a first lavatory compartment including the first toilet, and a second lavatory compartment including the second toilet, and (b) a stowed position, in which the lavatory system provides an expanded lavatory compartment that encompasses the spaces of both the first lavatory compartment and the second lavatory compartment, wherein the expanded lavatory compartment provides a contiguous space in which the first lavatory compartment is open to the second lavatory compartment.

Clause 14. The lavatory system of any of Clauses 1-13, further comprising:
a first diaper-changing station secured to one or more walls above the first toilet; and
a second diaper-changing station secured to the one or more walls above the second toilet.

Clause 15. A vehicle comprising:
an internal cabin; and
a lavatory system within the internal cabin, the lavatory system including:
   a monument defining an internal chamber, wherein the monument comprises a contoured wall configured to conform to at least a portion of a shape of one or more passenger seats within the internal cabin, and wherein the monument has fittings configured to be secured to seat tracks within the internal cabin;
   a first toilet within the internal chamber;
   a second toilet within the internal chamber;
   a moveable wall disposed between the first toilet and the second toilet, wherein the moveable wall is moveable between (a) an extended position, in which the lavatory system provides a first lavatory compartment including the first toilet, and a second lavatory compartment including the second toilet, and (b) a stowed position, in which the lavatory system provides an expanded lavatory compartment that encompasses the spaces of both the first lavatory compartment and the second lavatory compartment, wherein the expanded lavatory compartment provides a contiguous space in which the first lavatory compartment is open to the second lavatory compartment;
   a stowage chamber within the internal chamber, wherein the stowage chamber retains emergency equipment, wherein the stowage chamber is within the internal chamber and secured to one or both of a rear wall or a side wall of the monument, and wherein the stowage chamber is contained behind a curved shroud that connects to one or more of a ceiling, the rear wall, or the side wall; and
   a pedestal that has one or more portions that are shaped to provide additional space within the internal chamber, wherein pedestal extends vertically from a base floor, and is recessed toward a front wall of the monument.

Clause 16. The vehicle of Clause 15, wherein a front wall of the monument has a lower portion that is forward from an upper portion, and wherein a shape of the front wall conforms to a profile of the one or more passenger seats.

Clause 17. The vehicle of Clauses 15 or 16, wherein the first toilet and the second toilet are staggered in relation to one another.

Clause 18. The vehicle of any of Clauses 15-17, wherein the monument further comprises a lighting fixture secured to an upper portion of the curved shroud.

Clause 19. The vehicle of any of Clauses 15-18, wherein the monument is configured to be disposed at a location that is coaxial within a centerline of the internal cabin.

Clause 20. The vehicle of any of Clauses 15-19, further comprising:
a first diaper-changing station secured to one or more walls above the first toilet; and
a second diaper-changing station secured to the one or more walls above the second toilet.

As described herein, examples of the present disclosure provide improved lavatories for an internal cabin of a vehicle, such as a commercial aircraft.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like. Forward may be the direction that extends towards the front of the vehicle starting from the center of the lavatory system. The forward direction may be parallel to or align with the centerline of the internal cabin.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims.

## Claims

1. A lavatory system (100) configured to be disposed within an internal cabin (102) of a vehicle (104), the lavatory system (100) comprising:
a monument (106) defining an internal chamber, wherein the monument (106) comprises a contoured wall configured to conform to at least a portion of a shape of one or more passenger seats (124);
a first toilet (112) within the internal chamber; and
a second toilet (114) within the internal chamber.

2. The lavatory system (100) of claim 1, wherein a front wall (126) of the monument (106) has a lower portion (128) that is forward from an upper portion (130, 172), and wherein a shape of the front wall (126) conforms to a profile of the one or more passenger seats (124).

3. The lavatory system (100) of claim 1 or 2, wherein the first toilet (112) and the second toilet (114) are staggered in relation to one another.

4. The lavatory system (100) according to any one of claims 1 to 3, further comprising a stowage chamber (140) within the internal chamber, preferably wherein the stowage chamber (140) retains emergency equipment (142).

5. The lavatory system (100) of claim 4, wherein the stowage chamber (140) is within the internal chamber and secured to one or both of a rear wall (144) or a side wall of the monument (106).

6. The lavatory system (100) of claim 5, wherein the stowage chamber (140) is contained behind a curved shroud (145) that connects to one or more of a ceiling, the rear wall (144), or the side wall.

7. The lavatory system (100) of claim 6, further comprising a lighting fixture (149) secured to an upper portion (130, 172) of the curved shroud (145).

8. The lavatory system (100) according to any one of claims 1 to 7, further comprising a pedestal (146) that has one or more portions that are shaped to provide additional space within the internal chamber.

9. The lavatory system (100) of claim 8, wherein the pedestal (146) extends vertically from a base floor, and is recessed toward a front wall (126) of the monument (106).

10. The lavatory system (100) according to any one of claims 1 to 9, wherein the monument (106) has fittings configured to be secured to seat tracks within the lavatory system (102).

11. The lavatory system (100) according to any one of claims 1 to 10, wherein the monument (106) is configured to be disposed at a location that is coaxial within a centerline of the lavatory system (102).

12. The lavatory system (100) according to any one of claims 1 to 11, wherein the monument (106) further comprises a moveable wall (110) disposed between the first toilet (112) and the second toilet (114).

13. The lavatory system (100) of claim 12, wherein the moveable wall (110) is moveable between:
an extended position, in which the lavatory system (100) provides a first lavatory compartment (109) comprising the first toilet (112), and a second lavatory compartment (111) comprising the second toilet (114), and
a stowed position, in which the lavatory system (100) provides an expanded lavatory compartment (150) that encompasses the spaces of both the first lavatory compartment (109) and the second lavatory compartment (111), wherein the expanded lavatory compartment (150) provides a contiguous space in which the first lavatory compartment (109) is open to the second lavatory compartment (111).

14. The lavatory system (100) according to any one of claims 1 to 13, further comprising:
a first diaper-changing station (148) secured to one or more walls above the first toilet (112); and
a second diaper-changing station (148) secured to the one or more walls above the second toilet (114).

15. A vehicle (104) comprising:
an internal cabin (102); and
a lavatory system (100) according to any one of claims 1 to 14 within the internal cabin (102).
